# EUROPEAN PATENT SPECIFICATION

(11) **EP 3 839 197 B1**
(45) Date of publication and mention of the grant of the patent: **11.10.2023**
(21) Application number: 19218039.6
(22) Date of filing: 19.12.2019
(51) Int. Cl.: E21B 7/02, E21D 9/00, G01S 17/06, G01S 7/48, G01S 7/52, G01S 7/64, G05D 1/02, G01S 17/46, G01S 17/89, G05D 1/00

(54) **POSITIONING APPARATUS, ROCK DRILLING RIG AND METHOD FOR POSITIONING**
POSITIONIERUNGSVORRICHTUNG, STEINBOHRVORRICHTUNG UND POSITIONIERUNGSVERFAHREN
APPAREIL DE POSITIONNEMENT, DISPOSITIF DE FORAGE DE ROCHES ET PROCÉDÉ DE POSITIONNEMENT

(43) Date of publication of application: 23.06.2021
(73) Proprietor: Sandvik Mining and Construction Oy, 33330 Tampere (FI)
(72) Inventor: PESOLA, Mikko, 33311 Tampere (FI)
(74) Representative: Sandvik

(56) References cited:
- EP-A1- 3 094 806
- WO-A1-2015/106799
- US-A1- 2014 028 805
- LI JASON ET AL: "Evaluation of Photogrammetry for Use in Industrial Production Systems", 2018 IEEE 14TH INTERNATIONAL CONFERENCE ON AUTOMATION SCIENCE AND ENGINEERING (CASE), IEEE, 20 August 2018 (2018-08-20), pages 414-420, XP033463238, DOI: 10.1109/COASE.2018.8560496 [retrieved on 2018-12-04]

## Description

### Background of the invention

The invention relates to a positioning apparatus intended for assisting positioning of a mining work device of a rock drilling rig.

The invention further relates to a rock drilling rig and method of positioning a mining work device of a rock drilling rig.

The field of the invention is defined more specifically in the preambles of the independent claims.

In mines and at other work sites different type of rock drilling rigs are used. The rock drilling rigs are provided with one or more booms and rock drilling units are arranged at distal ends of the booms. The rock drilling unit comprises a feed beam along which a rock drilling machine is configured to be moved during the drilling procedure. Positioning of the drilling unit is a demanding task. Visibility to the target position may be poor and still the positioning should be made accurately to a preplanned drill hole position. Difficulties in the positioning measures may slow down the actual operation. Earlier patent publications WO 2015/106799 A1 and EP 3094806 A1 disclose methods for rock drilling rig positioning in underground tunnels.

### Brief description of the invention

An object of the invention is to provide a novel and improved rock drilling rig and positioning method.

The rock drilling rig according to the invention is characterized by the characterizing features of the independent apparatus claim.

The method according to the invention is characterized by the characterizing features of the independent method claim.

An idea of the disclosed solution is that the positioning apparatus of a rock drilling rig is intended for assisting positioning of a mining work device of the rock drilling rig and is therefore mountable to the mining work device. The apparatus is an optical device and comprises at least one pattern illuminating device for producing two-dimensional (2D) light pattern on a rock surface.

The mentioned two-dimensional light pattern deviates from simple light spots, which are one-dimensional and do not thereby form any light pattern.

One aim of the solution is to improve depth perception during positioning measures of the mining work device at the mine site.

An advantage of the disclosed solution is that the apparatus is simple, inexpensive and easy to mount. The apparatus provides visual data, which is intuitive as such. Further, since the visual positioning data is presented on the rock surface, the data is well visible all the time during the positioning. The rock surface is serving in a way as a displaying surface for the apparatus.

On the other hand, the apparatus may be considered as a kind of a mining HUD (Head-Up-Display) device wherein the positioning data is shown on the target surface, i.e. on the rock surface, of the positioning. Then the operator of the rock drilling rig needs not to move his head down for looking at lower instruments. The mining HUD also has the advantage that the operator's eyes do not need to refocus to view the outside after looking at the optically nearer instruments.

According to an embodiment, the solution includes producing optical positioning patterns of the rock surface, taking video camera images of the patterns while moving the position of the apparatus, and displaying the camera view on a display device for the operator. The display device may be onboard the rock drilling machine or it may be located external to the rock drilling site.

According to an embodiment, the apparatus is intended for assisting teleoperated rock drilling. Then the operator of the rock drilling rig is provided with camera pictures from the operating site and the operator executes remote control measures based on that.

According to an embodiment, the apparatus is configured to generate manually observed light patterns and optical information. Thus, no machine vision or pattern recognition systems are utilized. Visibly detectable range data is produced and utilized in this solution.

According to an embodiment, the apparatus is retro-fittable to any existing rock drilling unit or other mining work device. Thus, the existing devices may be easily updated with the disclosed aiming system.

According to an embodiment, the at least one pattern illuminating device is configured to produce structured light. The structured light is produced by projecting a known pattern, such as grids or horizontal bars on to a surface under observation. The way that these deform when striking surfaces allows vision systems to calculate the depth and surface information of the objects.

According to an embodiment, the mentioned structured light produced by the apparatus comprises a grid pattern.

According to an embodiment, the mentioned structured light produced by the apparatus comprises at least two parallel lines. Then the produced light pattern on the rock surface may comprise two or more horizontal and parallel lines. Alternatively, the lines may be vertically orientated.

According to an embodiment, the mentioned structured light produced by the apparatus comprises one horizontal and one vertical line. The lines have limited lengths. The apparatus may be adjusted to a pre-determined distance and when the illuminated vertical and horizontal lines cross each other symmetrically, then the mining work device is located at the pre-determined distance from the examined rock surface. When a reticle or cross hair is shown properly on the rock surface, then the correct distance has been reached.

According to an embodiment, the mentioned structured light produced by the apparatus comprises at least two patterns or pattern components which together form a pre-determined bigger pattern when a pre-determined distance between the mine work device and the rock surface is reached. For example, the pattern components may be arcs, which form together a circle.

According to an embodiment, visual properties of the produced light pattern on the rock surface are configured to change in response to distance between the apparatus and the examined rock surface.

According to an embodiment, clarity or clearness of the produced positioning pattern on the rock surface indicates distance between the mining work device and the rock surface. The apparatus may be focused for a certain distance and produces proper figures when the distance is as set. Other visual properties depending on the distance may be: shape of the visible light pattern; number of the visible light patterns or components of the light pattern; relative positions of two or more visible components of the produced light pattern; two or more visible light components forming the pre-determined pattern.

According to an embodiment, the apparatus comprises at least two illuminating devices mounted in angular position relative to each other and both being capable of producing dedicated light patterns on the rock surface, whereby the relative position of the shown light patterns on the rock surface is dependent on the distance between the apparatus and the rock surface.

According to an embodiment, the apparatus is configured to project a structured light pattern comprising straight lines and is configured to provide surface information of the rock surface in response to deformation of the straight lines of the light pattern on the uneven rock surface.

According to an embodiment, the structured light pattern may comprise a grid or several horizontal or vertical bars or lines. The projected pattern deforms when it is striking on the uneven rock surface. The bumpy the rock surface is, the more the lines of the pattern are bent.

According to an embodiment, as an alternative solution to the previous embodiment, any other regular and symmetric light pattern may be illuminated on the rock surface and when the rock surface comprises hills and valleys, the regularity of the pattern is deformed.

According to an embodiment, deformation of the light pattern on the uneven surface is quick to note visually without any technical devices. An advantage is that collisions of the mining work device may be avoided. Further, the operator may easily take into account the surface properties when positioning the mining work device, such as a rock drilling unit, to a suitable operational position.

According to an embodiment, the illuminating device of the positioning apparatus is a laser emitter. Laser emitters are accurate, durable and nowadays also inexpensive devices.

According to an embodiment, the illuminating device of the positioning apparatus is a grid laser configured to produce a grid pattern on the rock surface.

According to an embodiment, the apparatus comprises two illuminating devices which are both laser emitters configured to produce lines, arcs or angular shapes on the rock surface.

According to an embodiment, the illuminating device of the positioning apparatus comprises at least one led bulb.

According to an embodiment, the illuminating device of the positioning apparatus is a led projector comprising at least one led source and at least one optical lens. The led projector is provided with a predetermined focused point wherein the produced pattern is sharp.

According to an embodiment, the apparatus comprises at least one patterned reticle to achieve specific structured illumination geometries for serving as the light patterns.

According to an embodiment, the solutions relates to a rock drilling rig. The rig comprises a movable carrier and one or more drilling booms connected movably to the carrier and equipped with rock drilling units. The mentioned rock drilling unit comprises a feed beam and a rock drilling machine supported movably on the feed beam. The drilling unit is further provided with one or more optical positioning apparatuses which are in accordance with the features and embodiments disclosed in this document.

According to an embodiment, the optical positioning apparatus is mounted at a front end of the feed beam. Then the visual patterns may be easily produced against the surface being drilled.

According to an embodiment, the rock drilling unit comprises several optical positioning apparatuses which are directed into different directions relative to each other. Then the feed beam may be provided two positioning apparatuses at a front end portion and two positioning apparatuses at a rear end portion. The two positioning apparatuses at the front may be directed to produce their light patterns in perpendicular direction relative each other, and the same applies also for the two rear positioning apparatuses.

According to an embodiment, at least one positioning apparatus is mounted on a front end of the feed beam and is directed forwards.

According to an embodiment, direction of the apparatus is angled relative to the longitudinal direction of the rock drilling unit. Then the produced light pattern is formed at a lateral position on the rock surface relative to the longitudinal axis of the rock drilling unit. The angularity of the light pattern formation improves visibility of the light pattern since the rock drilling unit itself does not form any visibility obstacle for seeing it.

According to an embodiment, the rock drilling unit comprises at least one apparatus directed perpendicularly relative to longitudinal axis of the rock drilling unit.

According to an embodiment, the perpendicularly directed apparatus may serve as a collision prevention device. The apparatus creates a light pattern laterally on the side of the rock drilling unit whereby the operator is provided with distance detection assistance. This solution is advantageous when operating in narrow mine tunnels and especially when drilling contour drill holes of a drilling pattern.

According to an embodiment, the solution is utilized in collision prevention and is configured to produce an optical warning signal for an operator when predetermined safety zone or limit is exceeded. Then the apparatus may change color of the emitted light pattern or may flash the light pattern in order to produce a simple and easily notable warning signal.

According to an embodiment, the perpendicularly directed apparatus may be directed downwards, whereby the apparatus is arranged to provide collision protection when operating close to a bottom or floor of a mine tunnel or corresponding mine space.

According to an embodiment, the rock drilling unit is provided with at least one positioning aid apparatus at a front end portion and at least one positioning apparatus at a rear end portion of the drilling unit. Then, both ends of the drilling unit are provided with collision protection aids. The end portion of the drilling unit may comprise apparatuses directed laterally and downwards. The apparatuses may be mounted on the feed beam. Since the illuminating device is compact in size, it is relatively easy to mount needed amount of devices to suitable positions on the feed beam.

According to an embodiment, the rock drilling rig is provided with at least imaging device for observing the at least one positioning pattern produced by the at least one optical device. The imaging device may be a camera capable of producing video picture. Further, one single camera may be sufficient since no depth perception is needed in the camera view. In other words, there is no need for stereo camera system, whereby the imaging system may be simple, inexpensive and robust.

According to an embodiment, the solution relates to a method of positioning a rock drilling rig at a drilling site. The method comprises positioning a mining work device of the rock drilling rig towards a rock surface after which the drilling can be initiated. The positioning further comprises producing at least one light pattern by means of at least one optical apparatus mounted on the mining work device. The produced light pattern is illuminated on the rock surface.

According to an embodiment, the method further comprises sensing the optical light pattern on the rock surface by means of at least one camera, and displaying the pattern on at least one display device. This way the pattern may be shown at a remote located control position, for example.

According to an embodiment, the method further comprises detecting the optical light pattern on the rock surface manually by the operator and without additional technical means. This way the positioning means and the entire process may be simple and use of the solution may also be quick and intuitive.

According to an embodiment, the method further comprises determining distance between the mining work device and the rock surface by means of the illuminated one or more patterns. There may be pre-determined rules for detecting the distance by means of the patterns.

According to an embodiment, the disclosed method and use of the illuminated patterns may also be used for detecting shape of the rock surface. In other words, surface topography may also be detected or evaluated depending on the way the pattern is displayed on the rock surface. There may be pre-determined rules for detecting relevant surface related issues by means of the patterns.

According to an embodiment, the solution further comprises presenting augmented positioning data on the rock surface by including not only the graphical positioning patterns or markings on the rock surface but also numerical data, pre-determined depth symbols, colors, assisting text or other assisting information and data for the operator. This way, versatile additional data can be offered for the operator in order to facilitate the positioning and drilling process.

According to an embodiment, the solution further comprises utilizing laser writing technology to present the augmented positioning views. Then the apparatus may comprises one or more laser emitters capable of sweeping laser beams with high velocity so that the desired pattern in desired size can be displayed on the rock surface.

According to an embodiment, the solution comprises presenting augmented positioning data on the rock surface. The augmented data may be displayed on the rock surface either together with the above disclosed positioning patterns. Alternatively, the mining work device may be provided with sensing means for detecting the distance between the rock surface and the mining work device. In the latter case the suitable sensing means may include laser range finder devices, ultrasonic distance measuring systems and radars, for example.

According to an embodiment, the solution may implemented also when positioning other mine work devices than drilling units. This way, the solution may be arranged to assist rock bolting, charging and shotcreting, for example.

The above disclosed embodiments may be combined in order to form suitable solutions having those of the above features that are needed.

### Brief description of the figures

Some embodiments are described in more detail in the accompanying drawings, in which
Figure 1 is a schematic side view of a rock drilling rig for underground drilling and being provided with a drilling unit equipped with an optical positioning apparatus,
Figure 2 is a schematic view of a drilling pattern comprising positioning data on drill holes to be drilled on a face surface of a tunnel of rock space,
Figure 3 is a schematic and highly simplified view of a drilling unit provided with two positioning aid apparatuses mounted to a feed beam and generating optical patterns on rock surfaces,
Figure 4 is a schematic view of two optical patterns formed by means of an illuminating device mounted at a front end portion of a mining work device,
Figure 5 is a schematic side view of a drilling unit comprising positioning devices at its opposite end portions,
Figure 6 is a diagram showing some features of a positioning device,
Figure 7 is a diagram showing some implementations of a positioning device,
Figure 8 is a schematic view of an illuminated grid pattern on rock surface,
Figure 9 is a diagram showing some features of an augmented positioning data,
Figure 10 is a schematic illustration of a grid pattern when illuminated at different distances from the positioning aid device,
Figure 11 is a schematic view of two alternative grid patterns,
Figure 12 is a schematic view of two alternative positioning aid patterns comprising several parallel bars, and
Figure 13 is a schematic view of an optical positioning aid apparatus comprising two illuminating devices mounted in angular position relative to each other.

For the sake of clarity, the figures show some embodiments of the disclosed solution in a simplified manner. In the figures, like reference numerals identify like elements.

### Detailed description of some embodiments

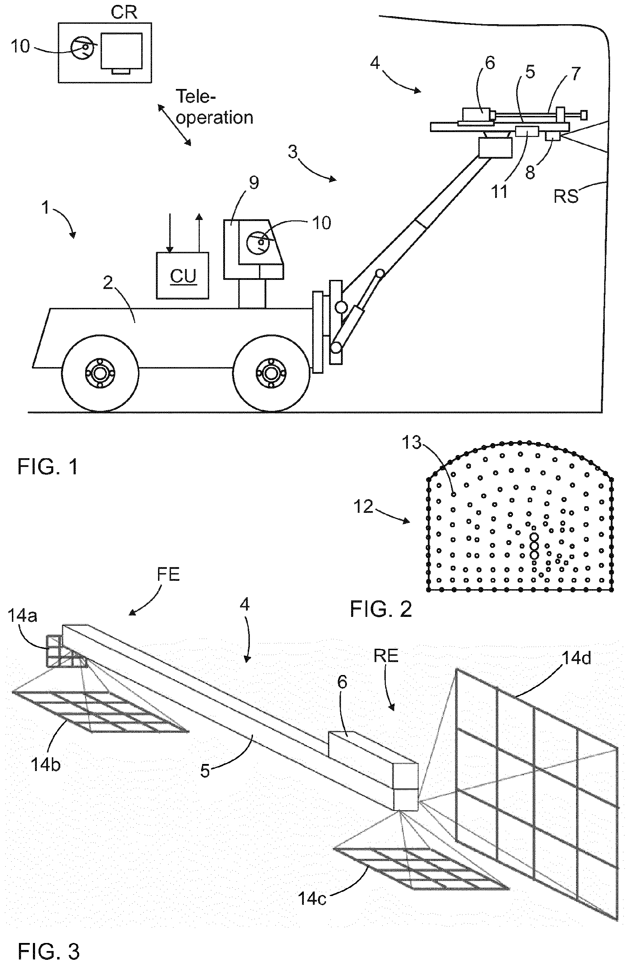

Figure 1 shows a rock drilling rig 1 intended for face drilling in a tunnelling process. The rock drilling rig 1 comprises a movable carrier 2 and one or more drilling booms 3 connected to the carrier 2. At a distal end portion of the drilling boom 3 is a drilling unit 4 provided with a feed beam 5 and a rock drilling machine 6 supported on it. A drilling tool 7 is connectable to the drilling machine 6. The rock drilling machine 6 may comprise a shank at a front end of the rock drilling machine 6 for connecting a tool 7. The drilling unit 4 is further provided with one or more optical positioning apparatuses 8 configured to illuminate optical patterns on a rock surface RS. In Figure 1 the optical pattern is shown or displayed on a face surface of an excavated tunnel or rock space.

The rock drilling rig 1 may be operated manually by means of an operator 10. The rig 1 may comprise a control cabin 11 on-board, or alternatively the rig 1 may be remote controlled from a control room CR by means of teleoperation. In both cases there exists visibility problems. The present solution aims to provide optical positioning aid for the operator 10. Especially the positioning aid apparatus provides improvements for depth perception in tele-remote operation. The generated positioning aid pattern illuminated on the rock surface RS may be observed by means of one or more cameras 11 and the produced data may be presented on a display 12 at the control room CR or cabin 9 for the operator 10. The rock drilling rig 1 may comprise one or more control units CU. The control unit CU may control with one or more external control units or systems.

Figure 2 discloses a drilling pattern 12 comprising data on several drill holes 13 to be drilled. The drilling pattern 12 is pre-designed and defines for example starting positions for the drill holes 13. Thereby Figure 2 illustrates that a large number of drill holes 13 needs to be drilled accurately to the pre-designed locations despite of possible visibility problems and harsh conditions occurring at a drilling site.

Figure 3 discloses a drilling unit 4 comprising positioning aid apparatuses at its front end FE and rear end RE. The apparatuses are optical devices and comprise pattern illuminating devices for producing two-dimensional (2D) light patterns 14ab - 14d on a rock surface. The pattern illuminating device may be configured to produce structured light, in this case grid like patterns. A first light pattern 14a may be illuminated in forward direction in order to detect distance between the rock surface and a front end of a feed beam 5. Thus, the first light pattern may be used for positioning the feed beam 5 properly and with sufficient speed against the rock surface. A second light pattern 14b may be illuminated transversally in order to detect distance to a floor, ceiling or walls of a tunnel or rock space. The same applies also for the third light pattern 14c and the fourth light pattern 14d. The light patterns 14b - 14d may be used for securing that the drilling unit does not collide with surrounding rock surfaces and other objects.

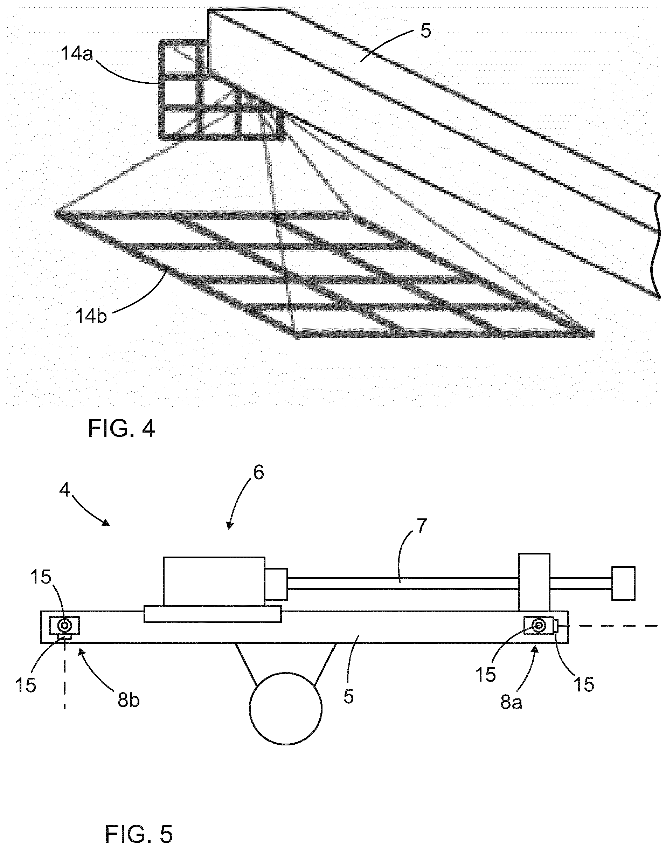

Figure 4 discloses a view which may be displayed on a display device of a rock drilling machine or other mining vehicle. The view may also presented at a teleoperation location such as in a remote control room. In other words, the rock drilling rig or mining vehicle may be provided with one or more cameras for producing video picture of the positioning situation. By means of light patterns 14a and 14b drawn on surrounding surfaces the operator is provided with optical and easily usable data on proximity of obstacles around a mining work device, such as a drilling unit. The camera may be mounted to a feed beam, to a boom or on a carrier of the mining vehicle.

Figure 5 discloses a drilling unit 4. Two optical positioning devices 8a and 8b are mounted to a feed beam 5. A first positioning device 8a generates light patterns in forward direction and laterally. A second positioning device 8b generates light patterns downwards and laterally. Both positioning devices 8a, 8b are provided with at least two illuminating devices 15 having angular mounting relative to each other. It may be possible that the positioning devices 8a, 8b have additional and selectable directions for generating the light patterns in accordance with the operational situation. Then the operator may remote-control the optical positioning device and may change the direction of the light pattern.

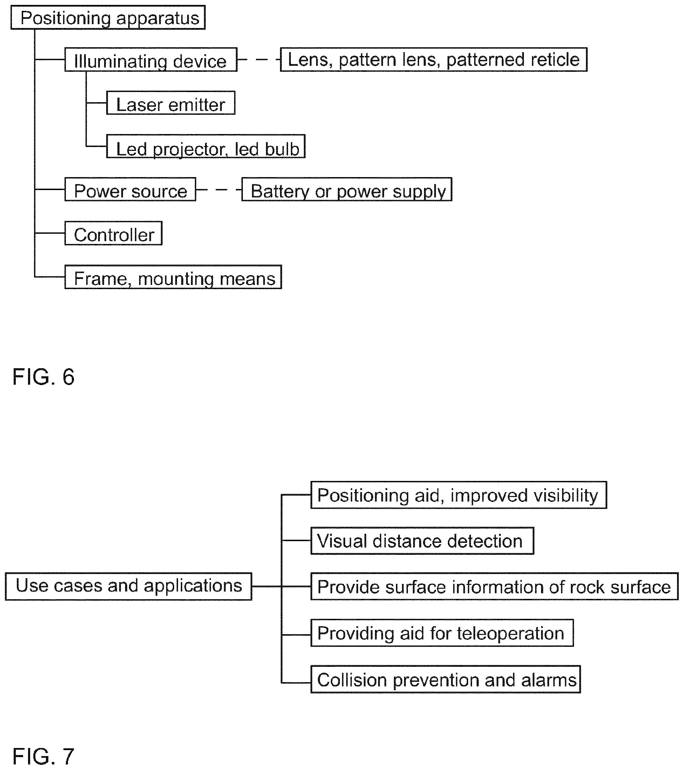

Figure 6 discloses some features of an optical positioning aid apparatus. The apparatus may a compact and robust device and may be configured to operate independently. The apparatus comprise a frame and mounting means for mounting it to a drilling unit or corresponding mine work device. The apparatus may be provided with a battery or it may be connected to power supply system in order to provide it with needed electric energy. The apparatus may further comprise a controller for controlling its operation. The controller may communicate with a control unit of the rock drilling rig and also with one or more control units located in a remote control room. The controller may be configured to adjust operation of the apparatus in accordance with received instructions and it may also comprise stored control parameters and strategies. The apparatus further comprises one or more illuminating devices. Features and possible alternatives of the illuminating device have already been disclosed earlier in this document.

Figure 7 is a diagram for summarizing how the disclosed solution can be utilized in practice. These issues have already been discussed earlier in this document.

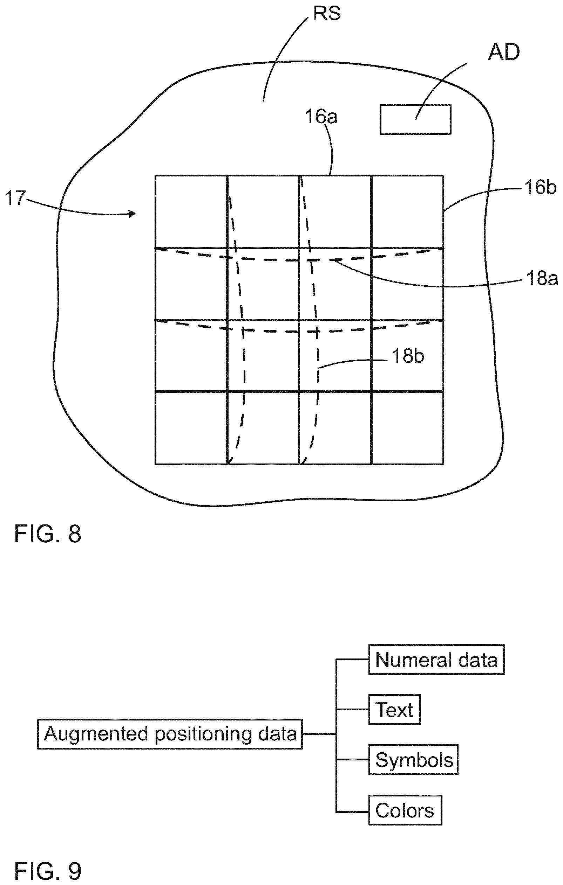

Figure 8 discloses that the disclosed apparatus projects a structured light pattern comprising straight lines 16a and 16b, in this case a grid-like pattern 17. The straight lines 16a, 16b will deform when the grid-like pattern 17 is projected on the uneven rock surface RS. Figure 8 shows in an exaggerated manner bend lines 18a, 18b on the rock surface RS comprising hills and valleys. This way visible surface information is provided for the operator. Furthermore, the apparatus may be configured to project augmented data elements AD on the rock surface RS.

Figure 9 illustrates what kind of data can be included in the augmented data element. Of course, the disclosed features may be combined. Additional information is already disclosed earlier in this document.

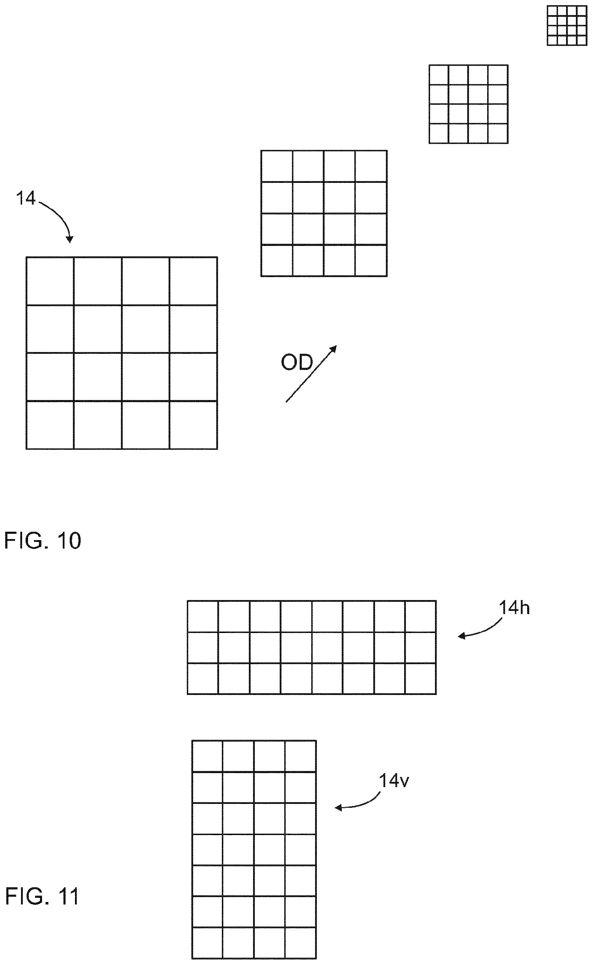

Figure 10 demonstrates that visual properties of the produced light pattern 14 on the rock surface changes in response to observed distance OD between the apparatus and the examined rock surface. The longer the distance is the smaller is the produced light pattern.

Figure 11 demonstrates that the light patterns may have different shapes and sizes. In Figure 11 there is a rectangular horizontal light pattern 14h and a rectangular vertical light pattern 14v.

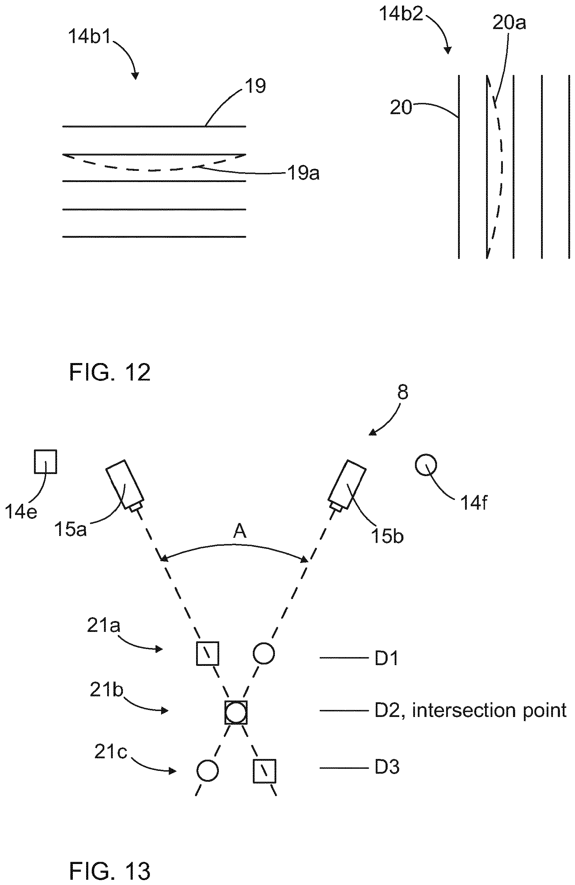

Figure 12 shows other examples of structured light patterns. On the left side is a light pattern 14b1 comprising parallel horizontal bars 19 or lines, and on the right side is a light pattern 14b2 comprising parallel vertical bars 20 or lines. It is also demonstrated that when the light patterns are projected on uneven rock surface then optical deviation occurs, as it is shown by means of bend lines 19a and 20a.

Thus, Figures 11 and 12 show some alternative structured two-dimensional light patterns.

Figure 13 discloses an alternative solution wherein a positioning apparatus 8 comprises two illuminating devices 15a and 15b mounted in angular position A relative to each other. Both illuminating devices 15a, 15b produce dedicated light patterns 14e, 14f on the rock surface. Since the light patterns 14e, 14f are projected angularly, relative position of the shown light patterns 14e, 14f on the rock surface is dependent on the distance D1 - D3 between the apparatus and the rock surface. This is demonstrated as different combined patterns 21a - 21c at different distances D1 - D3. The system and the operator may be provided with predetermined rules on how the combined patterns are interpreted and utilized in practice.

The drawings and the related description are only intended to illustrate the idea of the invention. In its details, the invention may vary within the scope of the claims.

## Claims

1. A rock drilling rig (1), comprising:
a movable carrier (2);
at least one drilling boom (3) connected movably to the carrier (2) and equipped with a rock drilling unit (4), wherein the rock drilling unit (4) comprises a feed beam (5) and a rock drilling machine (6) supported movably on the feed beam (5);
**characterised in that** the drilling unit (4) is provided with optical positioning apparatuses (8); and
wherein each positioning apparatus (8) comprises at least one pattern illuminating device (15) for producing two-dimensional (2D) light patterns (14) on a rock surface (RS) for assisting positioning of the rock drilling machine (6) ;
wherein
a positioning apparatus (8a) is mounted on a front end (FE) of the feed beam (5) of the rock drilling unit (4) and is directed forwards for producing a two-dimensional light pattern (14) against the surface being drilled; and
a positioning apparatus (8b) is mounted on a rear end (RE) of the feed beam (5) of the rock drilling unit (4) and is directed perpendicularly relative to longitudinal axis of the rock drilling unit (4).

2. The rock drilling rig (1) as claimed in claim 1, **characterized in that**
the at least one pattern illuminating device (15) is configured to produce structured light.

3. The rock drilling rig (1) as claimed in claim 1 or 2, **characterized in that**
visual properties of the produced light pattern (14) on the rock surface (RS) are configured to change in response to distance (OD) between the positioning apparatus (8) and the examined rock surface (RS).

4. The rock drilling rig (1) as claimed in any one of the preceding claims 1 - 3, **characterized in that**
each positioning apparatus (8) comprises at least two illuminating devices (15a, 15b) mounted in angular position (A) relative to each other and both being capable of producing dedicated light patterns (14e, 14f) on the rock surface (RS), whereby the relative position of the shown light patterns (14e, 14f) on the rock surface (RS) is dependent on the distance (D1 - D3) between the positioning apparatus (8) and the rock surface (RS).

5. The rock drilling rig (1) as claimed in any one of the preceding claims 1 - 4, **characterized in that**
each positioning apparatus (8) is configured to project a structured light pattern (14, 17) comprising straight lines (16a, 16b) and is configured to provide surface information of the rock surface (RS) in response to deformation of the straight lines of the light pattern (14, 17) on the uneven rock surface.

6. The rock drilling rig (1) as claimed in any one of the preceding claims 1 - 5, **characterized in that**
the illuminating device (15) is a laser emitter.

7. The rock drilling rig (1) as claimed in any one of the preceding claims 1 - 5, **characterized in that**
the illuminating device (15) comprises at least one led bulb.

8. The rock drilling rig (1) as claimed in any one of the preceding claims 1 - 7, **characterized in that**
each positioning apparatus (8) comprises at least one patterned reticle to achieve specific structured illumination geometries for serving as the light patterns (14).

9. The rock drilling rig as claimed in any one of the preceding claims 1 - 8, **characterized in that**
the rock drilling rig (1) is provided with at least one imaging device (11) for observing the at least one positioning pattern (14) produced by at least one optical positioning apparatus (8).

10. A method of positioning, at a drilling site, a rock drilling rig (1)comprising a movable carrier (2) and at least one drilling boom (3) connected movably to the carrier (2) and equipped with a rock drilling unit (4), wherein the rock drilling unit (4) comprises a feed beam (5) and a rock drilling machine (6) supported movably on the feed beam (5), wherein the method comprises positioning the rock drilling unit (4) of the rock drilling rig (1) towards a rock surface (RS); and
producing light patterns (14) by means of optical positioning apparatuses (8) mounted on the rock drilling unit (4);
**characterized by**
producing a light pattern (14) by means of an optical positioning apparatus (a) mounted on a front end (FE) of the feed beam (5) of the rock drilling unit (4) and directed forwards for producing a two-dimensional light pattern (14) against the surface being drilled;
producing a light pattern (14) by means of an optical positioning apparatus (8b) mounted on a rear end (RE) of the feed beam (5) of the rock drilling unit (4) and directed perpendicularly relative to longitudinal axis of the rock drilling unit (4); and
illuminating the produced light pattern (14) on the rock surface (RS).

11. The method as claimed in claim 10, **characterized by**
examining the illuminated light pattern (14) only visually; and
utilizing the produced visual data for providing controlling aid when controlling operation of the rock drilling (1).

## Patentansprüche

1. Gesteinsbohrgerät (1), umfassend:
einen beweglichen Träger (2);
zumindest einen Bohrarm (3), der mit dem Träger (2) beweglich verbunden ist und mit einer Gesteinsbohreinheit (4) ausgestattet ist, wobei die Gesteinsbohreinheit (4) einen Vorschubbalken (5) und eine Gesteinsbohrmaschine (6), die beweglich auf dem Vorschubbalken (5) getragen wird, umfasst; und
**dadurch gekennzeichnet, dass** die Bohreinheit (4) mit optischen Positionierungseinrichtungen (8) bereitgestellt ist; und
wobei jede Positionierungseinrichtung (8) mindestens eine Musterbeleuchtungsvorrichtung (15) zum Erzeugen zweidimensionaler (2D) Lichtmuster (14) auf einer Gesteinsoberfläche (RS) zum Unterstützen bei Positionierung der Gesteinsbohrmaschine (6) umfasst;
wobei
eine Positionierungseinrichtung (8a) an einem vorderen Ende (FE) des Vorschubbalkens (5) der Gesteinsbohreinheit (4) montiert ist und nach vorne gerichtet ist, um ein zweidimensionales Lichtmuster (14) gegen die zu bohrende Oberfläche zu erzeugen; und
eine Positionierungseinrichtung (8b) an einem hinteren Ende (RE) des Vorschubbalkens (5) der Gesteinsbohreinheit (4) montiert ist und senkrecht zur Längsachse der Gesteinsbohreinheit (4) gerichtet ist.

2. Gesteinsbohrgerät (1) nach Anspruch 1, **dadurch gekennzeichnet, dass**
die mindestens eine Musterbeleuchtungsvorrichtung (15) zum Erzeugen von strukturiertem Licht konfiguriert ist.

3. Gesteinsbohrgerät (1) nach Anspruch 1 oder 2, **dadurch gekennzeichnet, dass**
visuelle Eigenschaften des erzeugten Lichtmusters (14) auf der Gesteinsoberfläche (RS) so konfiguriert sind, dass sie sich als Reaktion auf einen Abstand (OD) zwischen der Positionierungseinrichtung (8) und der untersuchten Gesteinsoberfläche (RS) ändern.

4. Gesteinsbohrgerät (1) nach einem der vorstehenden Ansprüche 1 - 3, **dadurch gekennzeichnet, dass**
jede Positionierungseinrichtung (8) mindestens zwei Beleuchtungsvorrichtungen (15a, 15b) umfasst, die in Winkelposition (A) relativ zueinander montiert sind und beide in der Lage sind, dezidierte Lichtmuster (14e, 14f) auf der Gesteinsoberfläche (RS) zu erzeugen, wobei die relative Position der gezeigten Lichtmuster (14e, 14f) auf der Gesteinsoberfläche (RS) vom Abstand (D1 - D3) zwischen der Positionierungseinrichtung (8) und der Gesteinsoberfläche (RS) abhängig ist.

5. Gesteinsbohrgerät (1) nach einem der vorstehenden Ansprüche 1 - 4, **dadurch gekennzeichnet, dass**
jede Positionierungseinrichtung (8) so konfiguriert ist, dass sie ein strukturiertes Lichtmuster (14, 17) projiziert, das gerade Linien (16a, 16b) umfasst, und so konfiguriert ist, dass sie als Reaktion auf eine Verformung der geraden Linien des Lichtmusters (14, 17) auf der unebenen Gesteinsoberfläche Oberflächeninformationen der Gesteinsoberfläche (RS) bereitstellt.

6. Gesteinsbohrgerät (1) nach einem der vorstehenden Ansprüche 1 - 5, **dadurch gekennzeichnet, dass**
die Beleuchtungsvorrichtung (15) ein Laserstrahler ist.

7. Gesteinsbohrgerät (1) nach einem der vorstehenden Ansprüche 1 - 5, **dadurch gekennzeichnet, dass**
die Beleuchtungsvorrichtung (15) mindestens eine LED-Lampe umfasst.

8. Gesteinsbohrgerät (1) nach einem der vorstehenden Ansprüche 1 - 7, **dadurch gekennzeichnet, dass**
jede Positionierungseinrichtung (8) mindestens ein gemustertes Retikel umfasst, um spezifische strukturierte Beleuchtungsgeometrien zu erzielen, die als die Lichtmuster (14) dienen sollen.

9. Gesteinsbohrgerät nach einem der vorstehenden Ansprüche 1 - 8, **dadurch gekennzeichnet, dass**
das Gesteinsbohrgerät (1) mit mindestens einer Bildgebungsvorrichtung (11) zur Beobachtung des mindestens einen von mindestens einer optischen Positionierungseinrichtung (8) erzeugten Positionierungsmusters (14) bereitgestellt ist.

10. Verfahren zum Positionieren, an einer Bohrstelle, eines Gesteinsbohrgeräts (1), das einen beweglichen Träger (2) und mindestens einen Bohrarm (3), der beweglich mit dem Träger (2) verbunden ist und mit einer Gesteinsbohreinheit (4) ausgestattet ist, umfasst, wobei die Gesteinsbohreinheit (4) einen Vorschubbalken (5) und eine beweglich auf dem Vorschubbalken (5) getragene Gesteinsbohrmaschine (6) umfasst, wobei das Verfahren Positionieren der Gesteinsbohreinheit (4) des Gesteinsbohrgeräts (1) in Richtung einer Gesteinsoberfläche (RS) umfasst; und
Erzeugen von Lichtmustern (14) mittels optischer Positionierungseinrichtungen (8), die an der Gesteinsbohreinheit (4) montiert sind;
**gekennzeichnet durch**
Erzeugen eines Lichtmusters (14) mittels einer optischen Positionierungseinrichtung (a), die an einem vorderen Ende (EE) des Vorschubbalkens (5) der Gesteinsbohreinheit (4) montiert ist und nach vorne gerichtet ist, um ein zweidimensionales Lichtmuster (14) gegen die zu bohrende Oberfläche zu erzeugen;
Erzeugen eines Lichtmusters (14) mittels einer optischen Positionierungseinrichtung (8b), die an einem hinteren Ende (RE) des Vorschubbalkens (5) der Gesteinsbohreinheit (4) montiert ist und senkrecht zur Längsachse der Gesteinsbohreinheit (4) gerichtet ist; und
Beleuchten des erzeugten Lichtmusters (14) auf der Gesteinsoberfläche (RS).

11. Verfahren nach Anspruch 10, **gekennzeichnet durch**
Untersuchen des beleuchteten Lichtmusters (14) nur visuell; und
Verwenden der erzeugten visuellen Daten zum Bereitstellen von Steuerungshilfe beim Steuern des Betriebs des Gesteinsbohrers (1).

## Revendications

1. Appareil de forage de roches (1), comprenant :
un chariot mobile (2) ;
au moins une flèche de forage (3) reliée de manière mobile au chariot (2) et équipée d'une unité de forage de roches (4), dans lequel l'unité de forage de roches (4) comprend une poutre de guidage (5) et une machine de forage de roches (6) supportée de manière mobile sur la poutre de guidage d'alimentation (5) ;
**caractérisé en ce que** l'unité de forage (4) est pourvue d'appareils de positionnement optique (8) ; et
dans lequel chaque appareil de positionnement (8) comprend au moins un dispositif d'éclairage de motif (15) pour produire des motifs lumineux bidimensionnels (2D) (14) sur une surface rocheuse (RS) pour aider au positionnement de la machine de forage de roches (6) ;
dans lequel
un appareil de positionnement (8a) est monté sur une extrémité avant (FE) de la poutre de guidage (5) de l'unité de forage de roches (4) et est dirigé vers l'avant pour produire un motif lumineux bidimensionnel (14) contre la surface qui est forée ; et
un appareil de positionnement (8b) est monté sur une extrémité arrière (RE) de la poutre de guidage (5) de l'unité de forage de roches (4) et est dirigé perpendiculairement par rapport à l'axe longitudinal de l'unité de forage de roches (4).

2. Appareil de forage de roches (1) selon la revendication 1, **caractérisé en ce que**
le au moins un dispositif d'éclairage de motif (15) est configuré pour produire une lumière structurée.

3. Appareil de forage de roches (1) selon la revendication 1 ou 2, **caractérisé en ce que**
des propriétés visuelles du motif lumineux produit (14) sur la surface rocheuse (RS) sont configurées pour changer en réponse à la distance (OD) entre l'appareil de positionnement (8) et la surface rocheuse examinée (RS).

4. Appareil de forage de roches (1) selon l'une quelconque des précédentes revendications 1-3, **caractérisé en ce que**
chaque appareil de positionnement (8) comprend au moins deux dispositifs d'éclairage (15a, 15b) montés en position angulaire (A) l'un par rapport à l'autre et pouvant tous deux produire des motifs lumineux dédiés (14e, 14f) sur la surface rocheuse (RS), selon lequel la position relative des motifs lumineux représentés (14e, 14f) sur la surface rocheuse (RS) dépend de la distance (D1-D3) entre l'appareil de positionnement (8) et la surface rocheuse (RS).

5. Appareil de forage de roches (1) selon l'une quelconque des précédentes revendications 1-4, **caractérisé en ce que**
chaque appareil de positionnement (8) est configuré pour projeter un motif lumineux structuré (14, 17) comprenant des lignes droites (16a, 16b) et est configuré pour fournir des informations de surface de la surface rocheuse (RS) à la suite de la déformation des lignes droites du motif lumineux (14, 17) sur la surface rocheuse irrégulière.

6. Appareil de forage de roches (1) selon l'une quelconque des précédentes revendications 1-5 précédentes, **caractérisé en ce que**
le dispositif d'éclairage (15) est un émetteur laser.

7. Appareil de forage de roches (1) selon l'une quelconque des précédentes revendications 1-5, **caractérisé en ce que**
le dispositif d'éclairage (15) comprend au moins une ampoule à LED.

8. Appareil de forage de roches (1) selon l'une quelconque des précédentes revendications 1-7, **caractérisé en ce que**
chaque appareil de positionnement (8) comprend au moins un réticule à motif pour obtenir des géométries d'éclairage structurées spécifiques pour servir de motifs lumineux (14).

9. Appareil de forage de roches selon l'une quelconque des précédentes revendications 1-8, **caractérisé en ce que**
l'appareil de forage de roches (1) est pourvu d'au moins un dispositif d'imagerie (11) pour observer le au moins un motif de positionnement (14) produit par au moins un appareil de positionnement optique (8).

10. Procédé de positionnement, sur un site de forage, d'un appareil de forage de roches (1) comprenant un chariot mobile (2) et au moins une flèche de forage (3) reliée de manière mobile au chariot (2) et équipée d'une unité de forage de roches (4), dans lequel l'unité de forage de roches (4) comprend une poutre de guidage (5) et une machine de forage de roches (6) supportée de manière mobile sur la poutre de guidage (5), dans lequel le procédé comprend le positionnement de l'unité de forage de roches (4) de l'appareil de forage de roches (1) vers une surface rocheuse (RS) ; et
la production de motifs lumineux (14) au moyen d'appareils de positionnement optique (8) montés sur l'unité de forage de roches (4) ;
**caractérisé par**
la production d'un motif lumineux (14) au moyen d'un appareil de positionnement optique (a) monté sur une extrémité avant (FE) de la poutre de guidage d'alimentation (5) de l'unité de forage de roches (4) et dirigé vers l'avant pour produire un motif lumineux bidimensionnel (14) contre la surface qui est forée ;
la production d'un motif lumineux (14) au moyen d'un appareil de positionnement optique (8b) monté sur une extrémité arrière (RE) de la poutre de guidage (5) de l'unité de forage de roches (4) et dirigé perpendiculairement par rapport à l'axe longitudinal de l'unité de forage de roches (4) ; et
l'éclairement du motif lumineux produit (14) sur la surface rocheuse (RS).

11. Procédé selon la revendication 10, **caractérisé par**
l'examen du motif lumineux éclairé (14) uniquement visuellement ; et
l'utilisation des données visuelles produites pour fournir une aide à la commande lors du contrôle de l'opération du forage de roches (1).
